# EUROPÄISCHE PATENTSCHRIFT

(11) **EP 2 271 421 B1**
(45) Veröffentlichungstag und Bekanntmachung des Hinweises auf die Patenterteilung: **23.10.2013**
(21) Anmeldenummer: 09729819.4
(22) Anmeldetag: 14.04.2009
(51) Int. Cl.: B01F 7/28, B01F 7/30, B29B 7/40

(54) **MISCHKOPF FÜR FLÜSSIGE UND PASTÖSE KOMPONENTEN**
MIXING HEAD FOR LIQUID AND PASTY COMPONENTS
TÊTE DE MÉLANGE POUR COMPOSANTS LIQUIDES ET PÂTEUX

(30) Priorität: 11.04.2008 DE 102008018379
(43) Veröffentlichungstag der Anmeldung: 12.01.2011
(73) Patentinhaber: Fa. Jarus Gmbh, 83135 Schechen (DE)
(72) Erfinder: ALTENBURGER, Joseph, 83026 Rosenheim (DE); SCHUSTER, Rudolf, 85551 Kirchheim (DE)
(74) Vertreter: Zeitler - Volpert - Kandlbinder
(86) Internationale Anmeldenummer: PCT/DE2009/000451
(87) Internationale Veröffentlichungsnummer: WO 2009/124531

(56) Entgegenhaltungen:
- EP-A- 0 108 167
- EP-A- 1 674 150
- DE-A1- 3 327 959
- DE-A1- 10 012 072
- FR-A- 2 664 505
- GB-A- 1 227 493
- US-A- 3 482 822
- US-A- 3 902 850

## Beschreibung

Um aus mehreren flüssigen bzw. pastösen Komponenten ein homogenes Gemisch zu erzielen werden in der Technik statische bzw. dynamische Mischer eingesetzt. Wird bei der Mischung eine chemische Reaktion ausgelöst, bei der das Gemisch aushärtet, werden die benetzten Stellen des Mischers mit Ablagerungen überzogen.

Die Ablagerungen sind umso stärker, je kleiner die Strömungsgeschwindigkeit in diesem Bereich ist. Dies führt dazu, dass sich die Konturen des Mischers ständig verändern, bis schließlich das Mischergebnis nicht mehr den Anforderungen entspricht.

Die Konturen des Mischers verwandeln sich in eine strömungsgünstige Form, die gegenüber dem Ursprungszustand eine verminderte Mischqualität ergeben.

Die nun notwendig werdende Reinigung des Mischers führt zu einer Unterbrechung des Produktionsablaufes. Abhängig vom Reinigungsprinzip kann dies 1/10 Sekunde bis zu einer Stunde dauern. Kann eine lange Reinigungszeit nicht akzeptiert werden, muss die Produktionsunterbrechung durch Einsatz eines zweiten Mischers überdrückt werden.

Bei dem aus der DE 29 24 554 A1 bekannten Mischkopf, vgl. Figur 3 und S. 11 bis 12 der Beschreibung, erfolgt die Vermischung der Komponenten durch eine in der Mischkammer rotierende Schnecke.

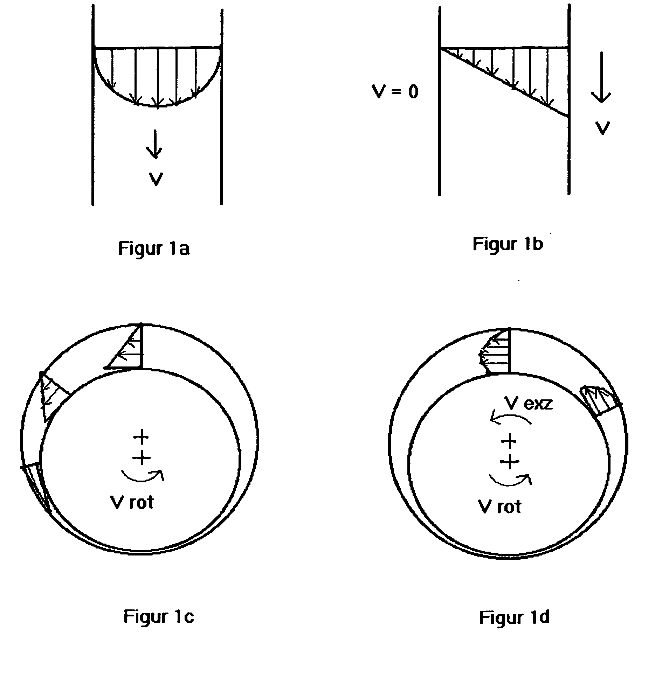

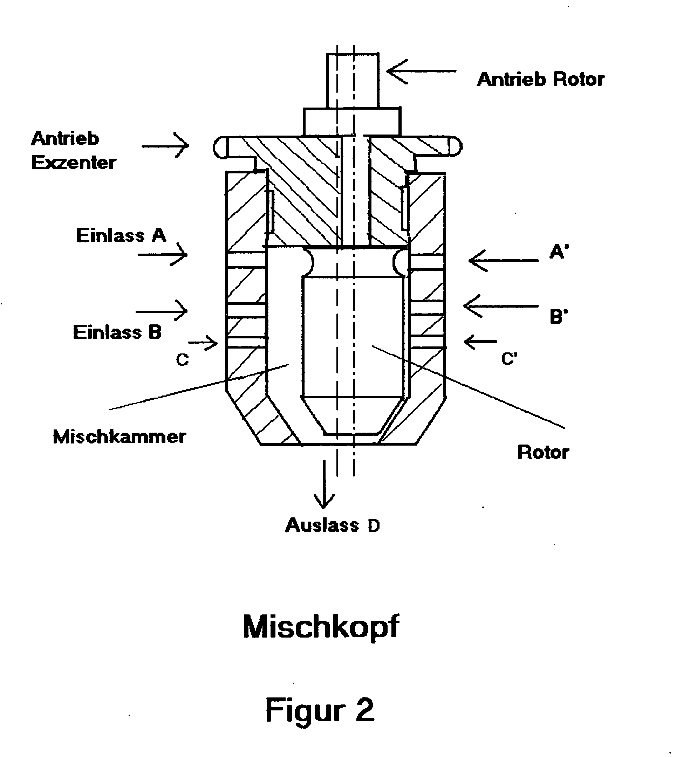

Bei der aus der DE 40 20 109 A1 bekannten Anlage zur Herstellung eines Reaktionsgemisches, vgl. Figur 1a und 2a mit der zugehörigen Beschreibung, werden die zu mischenden Komponenten einem Mischkopf 14 zugeführt, über dessen Innenleben keine näheren Ausführungen gemacht werden.

Die Patentschrift DD 211 311 beschreibt einen Mischkopf, bei dem ein in der Mischkammer hin und her bewegbarer Kolben mit Absperr-, Förder- und Reinigungsfunktion die Durchmischung der unter hohem Druck zugeführten Komponenten übernimmt

Die Patentschrift FR 2 664 505 offenbart einen Mischkopf entsprechend dem Oberbegriff des Anspruch 1.

Der Erfindung liegt die Aufgabe zugrunde, einen Mischer bzw. Mischkopf vorzustellen, bei dem die oben dargestellten Nachteile vermieden werden, also möglichst keine Reinigungszeiten während des Produktionsablaufes durch das Verhindern von Ablagerungen bei der Gestaltung des Mischkopfes.

Diese Aufgabe wird bei einem Mischkopf nach dem Oberbegriff des Anspruchs 1 durch die kennzeichnenden Merkmale des Anspruchs 1 gelöst.

Vorteilhafte Ausbildungen sind in den untergeordneten Ansprüchen 2 bis 6 beschrieben.

Der Grundgedanke der Erfindung liegt darin, die Stellen mit zu geringer Strömungsgeschwindigkeit im Mischkopf durch die Ausgestaltung der Mischkammer und des Rotors zu vermeiden.

Bei einer Strömung in einem Rohr bzw. Spalt entsteht ein Geschwindigkeitsprofil bei dem benachbarte Partikel zueinander verschoben werden, vgl. Figur 1 a.

Bei einer Strömung durch gegeneinander bewegte Flächen entsteht ein Geschwindigkeitsprofil nach Figur 1b.

Bei einem exzentrisch angeordnetem Rotor in einer zylinderförmigen Mischkammer ergeben sich Geschwindigkeitsveränderungen durch die über den Umfang des Rotors sich verändernde Spaltbreite wie in Figur 1c dargestellt.

Bewegt man nun nach Anspruch 1 den exzentrisch angeordneten Rotor zusätzlich auf einer Umlaufbahn um die Mittelachse der Mischkammer ergibt sich durch die Verdrängungswirkung eine Veränderung des Geschwindigkeitsprofils nach Figur 1d.

Die beste Vermischung von in der Mischkammer vorhandenen Komponenten tritt ein, wenn die Geschwindigkeitsprofile möglichst unterschiedlich sind.

Die zu mischenden Komponenten werden über die Einlassöffnungen A,A' und B,B' zugeführt, bei mehr als 2 Komponenten, wie z.B. der Zuführung eines Treibmittels wie z.B. Pentan, zusätzlich über die Einlassöffnungen C,C'. Das fertige Gemisch verlässt den Mischkopf über den Auslass D.

Der exzentrisch angeordnete Rotor wird neben seiner Eigenrotation ωR mit einer Exzentergeschwindigkeit ωE angetrieben, wodurch eine besonders gute Durchmischung der Komponenten und eine Verhinderung von Ablagerungen in der Mischkammer erreicht wird.

Werden die flüssigen bzw. pastösen zu mischenden Komponenten mit Druck auf die Einlassöffnungen gegeben und als Folge in axialer Richtung durch die Mischkammer gefördert, entsteht ein komplexes dreidimensionaies Geschwindigkeitsprofil, wodurch sich ein gute Vermischung der Komponenten ergibt.

Zwar werden auch bei dieser Anordnung bei der Vermischung von aushärtbaren Komponenten die benetzten Flächen mit Ablagerungen überzogen. Deren Wachstum wird jedoch durch den exzentrisch angeordneten Rotor an der engsten Stelle begrenzt.

Am Rotor und an der Mischkammerwand abgelagertes Material wird durch die Relativbewegung der Oberflächen voneinander abgetragen und durch die senkrecht dazu verlaufende Strömung aus dem Mischkopf ausgespült.

Nach dem Aufbau einer gleichmäßigen Beschichtung aus dem ausgehärteten Material wird ein eingeschwungener Produktionszustand erreicht.

Nach dem Beenden der Produktion ist ein Spülung des Mischkopfes mit Spülflüssigkeit notwendig.

Werden wie nach Anspruch 2 je Mischkomponente zwei Einlassöffnungen in der Mischkammer vorgesehen, die sich paarweise gegenüberliegend in der Wand der Mischkammer befinden, so erhält man in der Zuleitung der zu mischenden Komponente stabilere Druckverteilungen, da eine Einlassöffnung immer geöffnet ist.

Die Verlagerung der Einlassöffnungen für verschieden konsistente Komponenten in Richtung der Mischkammerachse nach den Ansprüchen 3 und,4 bewirkt, dass der unerwünschte Aushärtvorgang in der Mischkammer auf ein Minimum reduziert wird. Wird die dickflüssigere Komponente den Einlassöffnungen A und A' zugeführt, so schliesst diese das obere Ende so ab, dass es dort zu keinen durch Aushärten der Komponenten entstehenden Ablagerungen kommen kann.

Dies erreicht man auch durch die Dimensionierung der Durchmesser von Mischkammer und Rotor sowie die Wahl des Verhältnisses von Rotor- zu Exzentergeschwindigkeit nach Anspruch 5.

Einem der drei Öffnungspaare A, B oder C kann falls erforderlich ein Treibmittel wie z.B. Pentan zugeführt werden.

## Patentansprüche

1. Mischkopf für flüssige und pastöse Komponenten mit mehreren Einlass-(A,A',B,B',C,C') und wenigstens einer Auslassöffnung (D) sowie einer rotationssymmetrischen Mischkammer, in der ein Rotor die zu mischenden Komponenten durch seine Umdrehungsgeschwindigkeit vermischt, wobei sich der Rotor in der Mischkammer neben seiner eigenen Umdrehung auf einer exzentrischen Bahn bewegt und wobei die Mischkammer von den zu mischenden Komponenten im wesentlichen in Richtung der Bewegungsachsen des Rotors durchströmt wird, **dadurch gekennzeichnet,**
**dass** der Rotor von der Mischkammerwandung beabstandet ist
und **dass** der Rotor und die Mischkammer über den gesamten Bereich konisch geformt sind.

2. Mischkopf nach Anspruch 1, **dadurch gekennzeichnet, dass** je Mischkomponente wenigstens zwei Einlassöffnungen (A,A'; B,B'; C,C') in der Mischkammer vorgesehen sind, die sich paarweise gegenüberliegend in der Wand der Mischkammer befinden.

3. Mischkopf nach einem der vorhergehenden Ansprüche, **dadurch gekennzeichnet, dass** die Einlassöffnungen (A,A'; B,B'; C,C') für die verschiedenen Mischkomponenten in axialer Richtung der Mischkammer versetzt positioniert sind.

4. Mischkopf nach Anspruch 3, **dadurch gekennzeichnet, dass** sich die Einlassöffnungen (B,B') für die dünnflüssigere Mischkomponente näher an der Auslassöffnung befinden.

5. Mischkopf nach einem der vorhergehenden Ansprüche, **dadurch gekennzeichnet, dass** sich die Umfangsgeschwindigkeit des Rotors und die Umlaufgeschwindigkeit desselben an der engsten Stelle zwischen Rotor und Mischkammerwandung aufgrund der Exzenterbewegung im Verhältnis von etwa 1,5 zu 1 bis 2,5 zu 1 bewegt.

6. Mischkopf nach einem der vorhergehenden Ansprüche, **dadurch gekennzeichnet, dass** der Rotor und der entsprechende Teil der Mischkammer im Bereich der Auslassöffnung (D) eine konische Form aufweisen.

## Claims

1. Mixing head for liquid and pasty constituents, having a plurality of inlet openings (A, A', B, B', C, C') and at least one outlet opening (D) together with a rotationally symmetrical mixing chamber in which a rotor mixes the constituents to be mixed due to its speed of revolution, the rotor not only itself revolving in the mixing chamber but also moving along an eccentric path, and the constituents to be mixed flowing through the mixing chamber substantially in the direction defined by the axes on which the rotor moves, **characterised in that** the rotor is spaced away from the wall of the mixing chamber and **in that** the rotor and the mixing chamber are of a conical form over their entire region.

2. Mixing head according to claim 1, **characterised in that** there are provided in the mixing chamber at least two inlet openings (A, A'; B, B'; C, C') per constituent of the mixture which are situated in the wall of the mixing chamber as an opposed pair.

3. Mixing head according to either of the preceding claims, **characterised in that** the inlet openings (A, A'; B, B'; C, C') for the different constituents of the mixture are positioned with an offset in the axial direction of the mixing chamber.

4. Mixing head according to claim 3, **characterised in that** the inlet openings (B, B') for the less viscous constituent of the mixture are situated closer to the outlet opening.

5. Mixing head according to one of the preceding claims, **characterised in that**, at the point of closest approach between the rotor and the wall of the mixing chamber caused by the eccentric motion, the speed of the rotor at the circumference and the speed of rotation thereof vary in their ratio from approximately 1.5 to 1 to 2.5 to 1.

6. Mixing head according to one of the preceding claims, **characterised in that** the rotor and the corresponding part of the mixing chamber are'of a conical form in the region of the outlet opening (D).

## Revendications

1. Tête de mélange pour composants liquides et pâteux comprenant plusieurs ouvertures d'entrée (A, A', B, B', C, C') et au moins une ouverture de sortie (D) ainsi qu'une chambre de mélange à symétrie de révolution dans laquelle un rotor mélange les composants à mélanger du fait de sa vitesse de rotation, le rotor se déplaçant dans la chambre de mélange, outre sa propre rotation, sur un trajet excentrique, et la chambre de mélange est traversée par les composants à mélanger essentiellement à direction des axes de déplacement du rotor, **caractérisée en ce que** le rotor est à distance de la paroi de la chambre de mélange, et
**en ce que** le rotor et la chambre de mélange sont sous forme conique sur la totalité de la région.

2. Tête de mélange selon la revendication 1, **caractérisé en ce qu'**il est prévu au moins deux ouvertures d'entrée (A, A' ; B, B' ; C, C') dans la chambre de mélange pour chaque composant à mélanger,- lesquelles se trouvent par paires en opposition dans la paroi de la chambre de mélange.

3. Tête de mélange selon l'une des revendications précédentes, **caractérisée en ce que** les ouvertures d'entrée (A, A' ; B, B' ; C, C') pour les différents composants à mélanger sont positionnées en décalage en direction axiale de la chambre de mélange.

4. Tête de mélange selon la revendication 3, **caractérisée en ce que** les ouvertures d'entrée (B, B') pour les composants à mélanger les plus liquides se trouve au plus près de l'ouverture de sortie.

5. Tête de mélange selon l'une des revendications précédentes, **caractérisée en ce que** la vitesse périphérique du rotor et la vitesse de rotation de celui-ci à l'emplacement le plus étroit entre le rotor et la paroi de la chambre de mélange sont dans un rapport d'environ 1,5 sur 1, jusqu'à 2,5 sur 1 en raison du mouvement excentrique.

6. Tête de mélange selon l'une des revendications précédentes, **caractérisée en ce que** le rotor et la partie correspondante de la chambre de mélange présentent une forme conique dans la région de l'ouverture de sortie (D).
